# EUROPÄISCHE PATENTSCHRIFT

(11) **EP 2 526 263 B1**
(45) Veröffentlichungstag und Bekanntmachung des Hinweises auf die Patenterteilung: **13.06.2018**
(21) Anmeldenummer: 11707993.9
(22) Anmeldetag: 15.01.2011
(51) Int. Cl.: F01D 9/04, F01D 11/00

(54) **GEHÄUSESYSTEM FÜR EINE AXIALSTRÖMUNGSMASCHINE**
HOUSING SYSTEM FOR AN AXIAL TURBOMACHINE
SYSTÈME DE BOÎTIER POUR UNE TURBOMACHINE AXIALE

(30) Priorität: 21.01.2010 DE 102010005153
(43) Veröffentlichungstag der Anmeldung: 28.11.2012
(73) Patentinhaber: MTU Aero Engines AG, 80995 München (DE)
(72) Erfinder: BÖCK, Alexander, 82288 Kottgeisering (DE)
(86) Internationale Anmeldenummer: PCT/DE2011/000040
(87) Internationale Veröffentlichungsnummer: WO 2011/088819

(56) Entgegenhaltungen:
- DE-A1- 4 215 440
- US-A- 6 164 656
- US-A1- 2009 169 369
- US-B1- 6 464 457

## Beschreibung

Die Erfindung betrifft ein Gehäusesystem der im Oberbegriff des Patentanspruchs 1 angegebenen Art für eine Axialströmungsmaschine sowie eine Axialströmungsmaschine mit einem derartigen Gehäusesystem.

Gehäusesysteme für Axialströmungsmaschinen wie beispielsweise Flugzeugturbinen umfassen ein Gehäuse, in welchem Leitschaufeln üblicherweise kranzförmig angeordnet sind. Diese Leitschaufeln, die ein sogenanntes "Vane Cluster" bilden, sollen möglichst druckdicht gegenüber dem Gehäuse abgeschlossen sein, um unnötige Strömungsverluste während des Betriebs der zugeordneten Axialströmungsmaschine zu vermeiden. Bei Vane Clustern mit großer Umfangserstreckung und einer radial hohen hinteren Abschlusswand treten jedoch während des Betriebs der Axialströmungsmaschine große thermische Gradienten mit entsprechend hohen Belastungen im Bereich der hinteren Abschlusswand auf. Ab einer bestimmten Größe des Gehäuses bzw. der Leitschaufeln ist deshalb eine durchgehende Abschlusswand nicht mehr möglich, so dass die Leitschaufeln über einzelne Befestigungselemente am Gehäuse festgelegt werden. Ein derartiges Gehäusesystem ist beispielsweise der US 4,194,869 zu entnehmen.

Durch diese Art der Befestigung entstehen jedoch zwischen den Befestigungselementen und dem Gehäuse vergleichsweise viele Spalte, die zur Verringerung der während des Betriebs auftretenden Leckage Strömungen über ein Dichtelement abgedichtet werden müssen. Als Dichtelemente sind aus dem Stand der Technik beispielsweise Dichtungsplättchen (sogenannte "Leaf Seals") oder Dichtungsringe bekannt, welche die äußeren Leitschaufelfüße umspannen.

Als nachteilig an diesen bekannten Dichtelementen ist jedoch der Umstand anzusehen, dass sie vergleichsweise teuer und aufwändig zu montieren sind und dass ihre Dichtwirkung während des Betriebs der Axialströmungsmaschine häufig nachlässt. Dies führt zu einem verringerten Wirkungsgrad und einem entsprechend erhöhten Treibstoffbedarf. Aus der DE 42 15 440 A1 ist ein Gehäusesystem für eine Axialströmungsmaschine mit den Merkmalen des Oberbegriffs des Anspruchs 1 bekannt. Die US 2009/169369 A1 offenbart eine aus mehreren Segmenten aufgebaute Leitschaufelanordnung einer Turbine, wobei die einzelnen Segmente der Leitschaufelanordnung entsprechende Dichtungselemente aufweisen.

Aufgabe der vorliegenden Erfindung ist es, ein Gehäusesystem der eingangs genannten Art zu schaffen, welches während des Betriebs einer zugeordneten Axialströmungsmaschine eine gleichbleibend hohe Dichtwirkung gewährleistet.

Die Aufgabe wird erfindungsgemäß durch ein Gehäusesystem mit den Merkmalen des Patentanspruchs 1 sowie durch eine Axialströmungsmaschine gemäß Patentanspruch 12 mit einem derartigen Gehäusesystem gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Gehäusesystems als vorteilhafte Ausgestaltungen der Axialströmungsmaschine und umgekehrt anzusehen sind.

Ein erfindungsgemäßes Gehäusesystem für eine Axialströmungsmaschine, insbesondere für eine Flugzeugturbine, umfasst ein Gehäuse, wenigstens eine Leitschaufel, welche über zumindest ein Befestigungselement am Gehäuse festgelegt ist, ein Dichtelement zum Verringern einer Leckageströmung zwischen dem Befestigungselement und dem Gehäuse, wobei das Dichtelement zwischen einer bezüglich einer Strömungsrichtung der Axialströmungsmaschine stromab liegenden Wand des Befestigungselements und einer Wand des Gehäuses angeordnet ist, und ein Andrückmittel, mittels welchem das Dichtelement zumindest während des Betriebs der Axialströmungsmaschine mit einer Axialkraft beaufschlagbar und gegen die Wand des Gehäuses drückbar ist. Auf diese Weise ist gewährleistet, dass das Dichtelement zumindest während des Betriebs der zugeordneten Axialströmungsmaschine mit Hilfe des Andrückmittels gegen die als Dichtanlagefläche wirkende Wand des Gehäuses gedrückt wird, wodurch während des Betriebs der Axialströmungsmaschine eine sehr hohe und gleichbleibende Dichtwirkung sichergestellt ist. Das Gehäusesystem ist zudem kostengünstig herstellbar und einfach montierbar, so dass sich entsprechende Kostenvorteile sowohl bei der Herstellung, als auch bei der Wartung, Reparatur und Überholung ergeben. Des Weiteren ist das Befestigungselement an einem radial äußeren Schaufelfuß der Leitschaufel angeordnet, da auf diese Weise die aerodynamischen Eigenschaften der wenigstens einen Leitschaufel nicht beeinträchtigt werden. Zudem ist das Befestigungselement bei als Flugzeugturbinen ausgebildeten Axialströmungsmaschinen hierdurch auf einer heißgasabgewandten Seite angeordnet und wird während des Betriebs geringeren thermischen Belastungen ausgesetzt.

In einer vorteilhaften Ausgestaltung der Erfindung ist vorgesehen, dass das Dichtelement geschlitzt und/oder ringförmig und/oder mehrteilig und/oder elastisch verformbar ausgebildet ist. Ein geschlitztes Dichtelement erleichtert dabei aufgrund seiner erhöhten Beweglichkeit vorteilhaft die Montage. Indem das Dichtelement ringförmig ausgebildet ist, kann die verbesserte Dichtwirkung über den gesamten Umfang des Gehäuses sichergestellt werden. Dabei kann vorgesehen sein, dass das Dichtelement einteilig oder mehrteilig, beispielsweise in Form mehrerer Ringsegmente, ausgebildet ist, wodurch eine erhöhte konstruktive Freiheit gegeben ist. Indem das Dichtelement elastisch verformbar ist, kann sich das Dichtelement elastisch wellen, so dass auf einfache Weise ein Toleranzausgleich in Umfangsrichtung des Gehäuses und damit eine kontinuierliche Anlage des Dichtelements an der Wand des Gehäuses sichergestellt ist.

Weitere Vorteile ergeben sich, wenn das Befestigungselement einen hakenförmigen Bereich aufweist, der in einer zugeordneten Aufnahme des Gehäuses angeordnet ist. Dies ermöglicht eine einfache Montage und Demontage der wenigstens einen Leitschaufel am Gehäuse.

In einer weiteren vorteilhaften Ausgestaltung der Erfindung umfasst das Dichtelement zumindest eine Durchlassöffnung, insbesondere eine Zumessbohrung, mittels welcher ein Kühlluftstrom zwischen einem stromauf des Befestigungselements und einem stromab des Befestigungselements angeordneten Raum des Gehäusesystems einstellbar ist. Wegen der hohen Dichtigkeit kann ein für den Betrieb der jeweils zugeordneten Axialströmungsmaschine notwendiger Kühlluftstrom über die Durchlassöffnung sehr genau eingestellt werden. Hierdurch können vorteilhaft Kühlluft eingespart und der Wirkungsgrad der Axialströmungsmaschine verbessert werden.

Weitere Vorteile ergeben sich, indem das Andrückmittel als Andrückkante am Befestigungselement ausgebildet ist. Durch eine derartige Ausgestaltung des Andrückmittels wird das Dichtelement während des Betriebs der zugeordneten Axialströmungsmaschine über die auf die wenigstens eine Leitschaufel wirkenden Kräfte des Betriebsfluids mit einer über das Befestigungselement aufgebrachten Axialkraft durch die Andrückkante gegen die Wand des Gehäuses gedrückt, wodurch auf konstruktiv einfache Weise eine betriebssichere Anlage und eine besonders hohe Dichtwirkung erzielt werden.

In einer weiteren vorteilhaften Ausgestaltung der Erfindung ist eine Nut vorgesehen, in welcher ein radial innerer Endbereich des Dichtelements angeordnet ist. Dies ermöglicht eine besonders betriebs- und herausfallsichere Anordnung des Dichtelements. Weiterhin kann hierdurch eine Wand der Nut ebenfalls als Dichtanlagefläche wirken, gegen die das Dichtelement mit Hilfe des Andrückmittels zumindest während des Betriebs der zugeordneten Axialströmungsmaschine angedrückt wird. Somit wird die Dichtwirkung weiter verbessert.

Dabei hat es sich als vorteilhaft gezeigt, wenn die Nut schräg ausgebildet ist. Auf diese Weise ist das Dichtelement in der schrägen Nut gegen unerwünschtes Verkippen abgestützt, wodurch die Betriebssicherheit des Gehäusesystems weiter verbessert wird.

In weiterer Ausgestaltung ist die Nut axial versetzt zum Andrückmittel angeordnet. Mit anderen Worten ist die Nut nicht in Flucht mit dem Andrückmittel. Auf diese Weise ist eine besonders zuverlässige Anlage des Dichtelements an der Wand des Gehäuses und an einer Wand der Nut sichergestellt, wodurch eine besonders hohe Dichtwirkung unter allen Betriebsbedingungen der Axialströmungsmaschine gegeben ist.

In einer weiteren vorteilhaften Ausgestaltung der Erfindung ist vorgesehen, dass die Nut durch korrespondierende Ausnehmungen im Befestigungselement und in der Leitschaufel gebildet ist. Hierdurch kann die Nut vorteilhaft nach dem Festlegen des Befestigungselements und der wenigstens einen Leitschaufel am Gehäuse - beispielsweise durch Fräsen - in einem Verfahrensschritt ausgebildet werden. Auf diese Weise wird ein etwaiger Versatz zwischen der Ausnehmung des Befestigungselements und der korrespondierenden Ausnehmung der Leitschaufel vermieden. Alternativ kann auch vorgesehen sein, dass die Ausnehmungen bereits bei der Herstellung des Befestigungselements bzw. der Leitschaufel - beispielsweise durch Trennen und/oder durch Urformen - hergestellt werden.

In einer weiteren vorteilhaften Ausgestaltung der Erfindung sind mehrere Leitschaufeln vorgesehen, die in Form eines Leitschaufelkranzes am Gehäuse angeordnet sind. Hierdurch ermöglicht das Gehäusesystem eine gezielte Strömungsbeeinflussung bei einer zugeordneten Axialströmungsmaschine, so dass das Betriebsfluid der Axialströmungsmaschine in einem optimalen Winkel auf stromab des Leitschaufelkranzes angeordnete Laufschaufeln treffen kann. Zusammen mit der verbesserten Dichtwirkung wird hierdurch ein signifikant erhöhter Wirkungsgrad der Axialströmungsmaschine erzielt.

Dabei hat es sich in weiterer Ausgestaltung als vorteilhaft gezeigt, wenn der Leitschaufelkranz mehrere Leitschaufelsegmente umfasst, wobei jedes Leitschaufelsegment über wenigstens zwei Befestigungselemente am Gehäuse festgelegt ist. Hierdurch wird eine schnelle, einfache und stabile Befestigung der Leitschaufeln am Gehäuse des Gehäusesystems ermöglicht.

Ein weiterer Aspekt der Erfindung betrifft eine Axialströmungsmaschine, insbesondere eine Flugzeugturbine, welche ein Gehäusesystem gemäß einem der vorhergehenden Ausführungsbeispiele umfasst. Dies stellt eine hohe Dichtwirkung während des Betriebs der Axialströmungsmaschine sicher, wodurch sich ein entsprechend verbesserter Wirkungsgrad der Axialströmungsmaschine ergibt. Die weiteren sich hieraus ergebenden Merkmale und ihre Vorteile sind den vorhergehenden Beschreibungen zu entnehmen.

Dabei hat es sich weiterhin als vorteilhaft gezeigt, wenn innerhalb des Gehäuses des Gehäusesystems wenigstens eine Laufschaufel stromauf und/oder stromab der Leitschaufel angeordnet ist. Dies erlaubt eine konstruktiv flexible Anpassbarkeit der Axialströmungsmaschine an unterschiedliche Einsatzzwecke und Bauformen.

In einer weiteren vorteilhaften Ausgestaltung der Erfindung ist vorgesehen, dass das Gehäuse des Gehäusesystems wenigstens eine Dichtung, insbesondere eine Einlaufdichtung und/oder eine Honigwabendichtung,zur Verringerung einer Leckageströmung zwischen dem Gehäuse und einer Schaufelspitze der wenigstens einen Laufschaufel umfasst. Mit Hilfe einer derartigen Dichtung wird der Wirkungsgrad der Axialströmungsmaschine zusätzlich gesteigert.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: einen schematischen seitlichen Ausschnitt eines erfindungsgemäßen Gehäusesystems;
- Fig. 2: eine schematische und in Bezug auf die Anordnung des Dichtelements überhöht dargestellte seitliche Schnittansicht des in Fig. 1 gezeigten Details II;
- Fig. 3: eine schematische und ausschnittsweise Perspektivansicht des in Fig. 1 dargestellten Gehäusesystems;
- Fig. 4: eine schematische und ausschnittsweise Perspektivansicht eines in Fig. 3 gezeigten Leitschaufelkranzes;
- Fig. 5: eine schematische und ausschnittsweise Frontalansicht des in Fig. 3 und Fig. 4 gezeigten Leitschaufelkranzes; und
- Fig. 6: eine schematische Perspektivansicht des in Fig. 5 gezeigten Details VI.

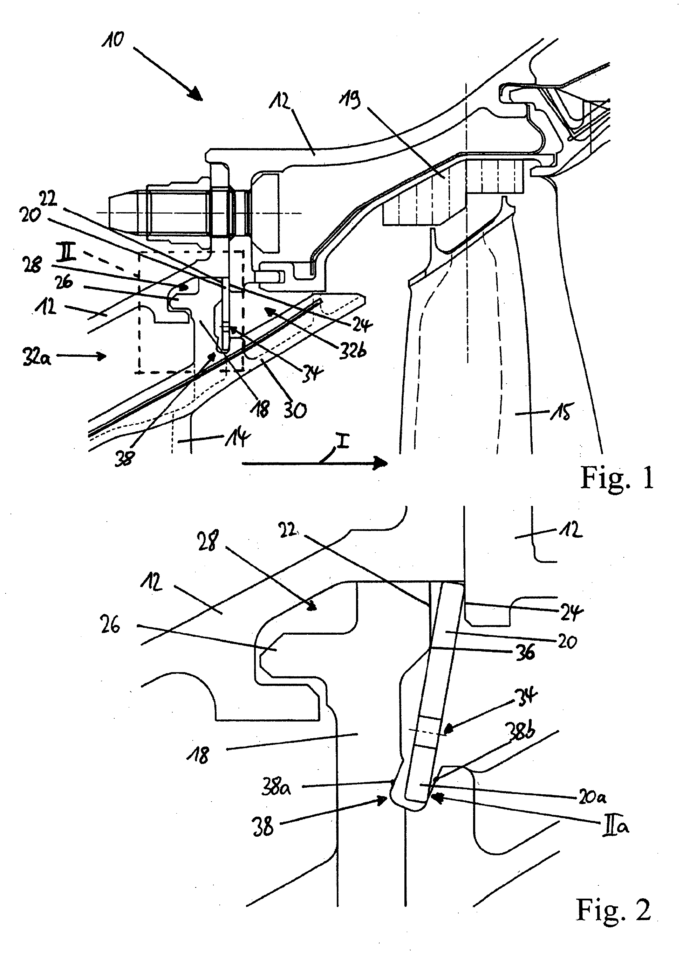

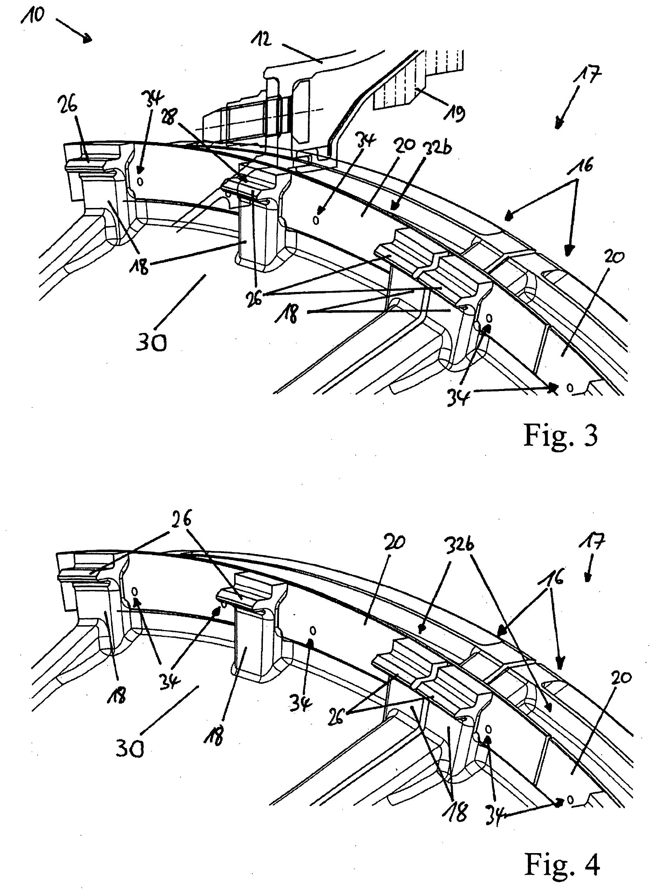

Fig. 1 zeigt einen schematischen seitlichen Ausschnitt eines Ausführungsbeispiels eines erfindungsgemäßen Gehäusesystems 10 für eine als Flugzeugturbine ausgebildete Axialströmungsmaschine (nicht gezeigt). Fig. 1 wird im Folgenden in Zusammenschau mit Fig. 2 erläutert werden. Fig. 2 zeigt ihrerseits eine schematische seitliche Schnittansicht des Details II, wobei die Anordnung des Dichtelements zur näheren Verdeutlichung überhöht dargestellt ist. Das Gehäusesystem 10 umfasst ein mehrteiliges Gehäuse 12 und eine Vielzahl von Leitschaufeln 14, von denen jeweils mehrere auf einer gemeinsamen Plattform zu Leitschaufelsegmenten 16 (s. Fig. 3) zusammengefasst sind. Die einzelnen Leitschaufelsegmente 16 sind ihrerseits innerhalb des Gehäuses 12 in Form eines Leitschaufelkranzes 17 als sogenanntes "Vane Cluster" angeordnet. Die Leitschaufeln 14 können dabei grundsätzlich feststehend und/oder verstellbar ausgebildet sein. Die Leitschaufeln 14 bzw. die Leitschaufelsegmente 16 sind über im Folgenden näher beschriebene Befestigungselemente 18 am Gehäuse 12 festgelegt.

Innerhalb des Gehäuses 12 des Gehäusesystems 10 ist im vorliegenden Ausführungsbeispiel ein mehrere Laufschaufeln 15 umfassender Laufschaufelring (nicht gezeigt) bezüglich einer Strömungsrichtung I der Axialströmungsmaschine stromab der Leitschaufeln 14 angeordnet. Um eine Leckageströmung zwischen dem Gehäuse 12 und den Schaufelspitzen der Laufschaufeln 15 zu verringern, umfasst das Gehäuse 12 des Gehäusesystems 10 eine Dichtung 19, die vorliegend als an sich bekannte Einlaufdichtung ausgebildet ist.

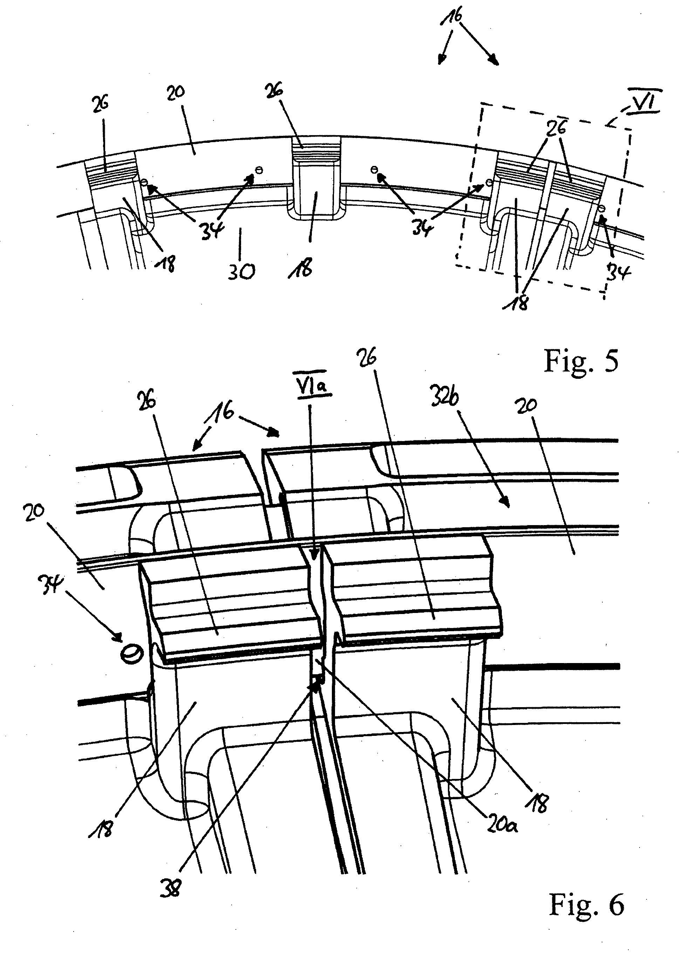

Zum Verringern einer Leckageströmung zwischen den Befestigungselementen 18 und dem Gehäuse 12 ist ein statisches Dichtelement 20 vorgesehen, welches zwischen einer bezüglich der Strömungsrichtung I der Axialströmungsmaschine stromab liegenden Wand 22 des Befestigungselements 18 und einer Wand 24 des Gehäuses 12 angeordnet ist. Die Wand 24 des Gehäuses 12 fungiert damit als in Umfangsrichtung des Gehäuses 12 umlaufende, axiale Dichtanlagefläche. Das Dichtelement 20 ist im vorliegenden Ausführungsbeispiel geschlitzt und mehrteilig in Form von Ringsegmenten ausgebildet. Weiterhin ist das Dichtelement 20 elastisch verformbar, wodurch es sich zwischen benachbarten Befestigungselementen 18 wellig verformen kann und zuverlässig anliegt (vgl. Fig. 6). Hierzu kann das Dichtelement 20 beispielsweise aus einem federelastischen, temperaturstabilen und/oder metallischen Material gefertigt sein. Anstelle der gezeigten mehrteiligen Ausbildung in Form von Ringsegmenten kann alternativ vorgesehen sein, dass das Dichtelement 20 einteilig - beispielsweise ringförmig - ausgebildet ist. Das Dichtelement 20 wird in im Folgenden näher erläuterter Weise während des Betriebs der Flugzeugturbine über die an den Leitschaufeln 14 auftretenden Gaskräfte geklemmt, so dass auf einfache und kostengünstige Weise eine besonders hohe und betriebssichere Dichtwirkung erzielt wird.

Wie insbesondere in Fig. 2 gut erkennbar ist, weist das Befestigungselement 18 einen hakenförmige Bereich 26 auf, der in einer zugeordneten Aufnahme 28 des Gehäuses 12 angeordnet ist. Hierdurch wird eine formschlüssige Verbindung mit geringer Einbauhöhe erzielt, wobei die Form der Aufnahme 28 und die Form des Befestigungselements 18 aufeinander abgestimmt sind. Zudem können die Leitschaufeln 14 hierdurch einfach am Gehäuse 12 montiert bzw. von diesem demontiert werden. Jedes Befestigungselement 18 ist dabei an einem radial äußeren Schaufelfuß 30 der betreffenden Leitschaufel 14 angeordnet. Neben der Abstützung der Leitschaufeln 14 besteht eine weitere wichtige Funktion der Schaufelfüße 30 in einer Dichtwirkung gegenüber einem Rotor der Axialströmungsmaschine zur Vermeidung einer Rezirkulation der verdichteten Luft aus einem Raum 32a höheren Druckes in einen Raum 32b niedrigeren Druckes. Wegen der hohen Dichtigkeit weist das Dichtelement 20 mehrere über den Umfang verteilte und als Zumessbohrung ausgebildete Durchlassöffnungen 34 (vgl. Fig. 3) auf, mittels welchen ein Kühlluftstrom zwischen dem stromauf des Befestigungselements 18 liegenden Raum 32a höheren Druckes und dem stromab des Befestigungselements 18 liegenden Raum 32b niedrigeren Druckes des Gehäusesystems 10 einstellbar ist. Auf diese Weise kann der notwendige Kühlluftstrom sehr genau eingestellt werden, so dass Kühlluft gespart und der Wirkungsgrad der Flugzeugturbine zusätzlich verbessert wird.

Wie insbesondere in Fig. 2 erkennbar ist, umfasst das Befestigungselement 18 ein Andrückmittel 36, welches vorliegend als an die Wand 22 angrenzende Andrückkante ausgebildet ist. Weiterhin weist das Befestigungselement 18 eine schräge Nut 38 auf, in welcher ein radial innerer Endbereich 20a des Dichtelements 20 angeordnet ist. Die Nut 38 ist in Strömungsrichtung I gesehen stromauf versetzt gegenüber dem Andrückmittel 36 angeordnet und damit nicht in Flucht mit der Wand 22 des Befestigungselements 18. Die Nut 38 wird im vorliegenden Ausführungsbeispiel durch zwei korrespondierende Ausnehmungen 38a, 38b gebildet. Dabei ist die Ausnehmung 38a im Befestigungselement 18 und die Ausnehmung 38b in der Leitschaufel 14 ausgebildet, wobei die Ausnehmung 38b zusammen mit der Wand 24 des Gehäuses 12 als Dichtanlagefläche fungiert. Die Nut 38 ist mit anderen Worten bezüglich des Dichtelements 20 im Bereich IIa mit einer "Überdeckung" ausgebildet, wodurch das Dichtelement 20 zwischen dem Befestigungselement 18, dem Gehäuse 12 und der Ausnehmung 38b der Leitschaufel 14 geklemmt wird und das Andrückmittel 36 eine besonders große axiale Andrückkraft auf das Dichtelement 20 ausüben kann. Das Dichtelement 20 wird somit durch die parallel zur Strömungsrichtung I wirkende Axialkraft der Leitschaufeln 14 über die Andrückkante 36 gegen die als axiale Dichtanlagen dienende Wand 24 des Gehäuses 12 und die Wand der Ausnehmung 38b gedrückt. Die Abstützung ist mit der genannten Überdeckung so konzipiert, dass das Dichtelement 20 vollständig an den Wänden 24 und 38b anliegt. Die Nut 38 ist dabei vorliegend aus Fertigungsgründen derart gekippt, dass die Andrückkante 36 die nachträgliche Herstellung der Nut 38 nach dem Festlegen des Befestigungselements 18 am Gehäuse 12 durch einen Fräs- oder Schleifvorgang ermöglicht.

Fig. 3 zeigt eine schematische und ausschnittsweise Perspektivansicht des in Fig. 1 dargestellten Gehäusesystems 10, wobei das Gehäuse 12 aus Gründen der Übersichtlichkeit lediglich in einer transparenten Schnittansicht abgebildet ist. Dabei ist insbesondere das ringsegmentförmige Dichtelement 20 mit den Durchlassöffnungen 34 gut erkennbar. Weiterhin ist erkennbar, dass jedes Leitschaufelsegment 16 über mehrere Befestigungselemente 18 mit dem Gehäuse 12 verbunden wird.

Fig. 4 zeigt zur weiteren Verdeutlichung eine schematische und ausschnittsweise Perspektivansicht des in Fig. 3 dargestellten Leitschaufelkranzes 17 ohne das Gehäuse 12. Entsprechend ist in Fig. 5 eine schematische und ausschnittsweise Frontalansicht des in Fig. 3 und Fig. 4 gezeigten Leitschaufelkranzes 17 in Strömungsrichtung I gezeigt. Dabei wird ersichtlich, dass die Stoßbereiche der einzelnen Leitschaufelsegmente 16 und der Ringsegmente des Dichtelements 20 in Umfangsrichtung versetzt zueinander angeordnet sind, um auch unter schwankenden Temperaturbedingungen eine hohe Dichtwirkung sicherzustellen.

Fig. 6 zeigt eine schematische Perspektivansicht des in Fig. 5 gezeigten Details VI. Dabei sind insbesondere der Raum 32b niedrigeren Druckes sowie der Stoßbereich zwischen zwei Leitschaufelsegmenten 16 erkennbar. Weiterhin ist mit dem Pfeil VIa ein Bereich zwischen zwei benachbarten Befestigungselementen 18 gekennzeichnet, im welchem sich das elastische Dichtelement 20 in Umfangsrichtung wellig verformt, so dass es vollständig an der Wand 24 und der Wand der Ausnehmung 38b anliegt.

## Patentansprüche

1. Gehäusesystem (10) für eine Axialströmungsmaschine, insbesondere für eine Flugzeugturbine, mit:
- einem Gehäuse (12);
- wenigstens einer Leitschaufel (14), welche über zumindest ein Befestigungselement (18) am Gehäuse (12) festgelegt ist;
- einem Dichtelement (20) zum Verringern einer Leckageströmung zwischen dem Befestigungselement (18) und dem Gehäuse (12), **dadurch gekennzeichnet, dass** das Dichtelement (20) zwischen einer bezüglich einer Strömungsrichtung (I) der Axialströmungsmaschine stromab liegenden Wand (22) des Befestigungselements (18) und einer Wand (24) des Gehäuses (12) angeordnet ist, wobei das Befestigungselement (18) an einem radial äußeren Schaufelfuß (30) der Leitschaufel (14) angeordnet ist; und
- einemAndrückmittel (36), welches als an die Wand (22) angrenzende Andrückkante ausgebildet ist, mittels welchem das Dichtelement (20) zumindest während des Betriebs der Axialströmungsmaschine mit einer Axialkraft beaufschlagbar und gegen die Wand (24) des Gehäuses (12) drückbar ist.

2. Gehäusesystem (10) nach Anspruch 1, **dadurch gekennzeichnet, dass** das Dichtelement (20) geschlitzt und/oder ringförmig und/oder mehrteilig und/oder elastisch verformbar ausgebildet ist.

3. Gehäusesystem (10) nach Anspruch 1 oder 2, **dadurch gekennzeichnet, dass** das Befestigungselement (18) einen hakenförmige Bereich (26) aufweist, der in einer zugeordneten Aufnahme (28) des Gehäuses (12) angeordnet ist.

4. Gehäusesystem (10) nach einem der Ansprüche 1 bis 3, **dadurch gekennzeichnet, dass** das Dichtelement (20) zumindest eine Durchlassöffnung (34), insbesondere eine Zumessbohrung, umfasst, mittels welcher ein Kühlluftstrom zwischen einem stromauf des Befestigungselements (18) und einem stromab des Befestigungselements (18) angeordneten Raum (32a, 32b) des Gehäusesystems (10) einstellbar ist.

5. Gehäusesystem (10) nach einem der Ansprüche 1 bis 4, **dadurch gekennzeichnet, dass** das Andrückmittel (36) als Andrückkante am Befestigungselement (18) ausgebildet ist.

6. Gehäusesystem (10) nach einem der Ansprüche 1 bis 5, **dadurch gekennzeichnet, dass** eine Nut (38) vorgesehen ist, in welcher ein radial innerer Endbereich (20a) des Dichtelements (20) angeordnet ist.

7. Gehäusesystem (10) nach Anspruch 6, **dadurch gekennzeichnet, dass** die Nut (38) schräg ausgebildet ist.

8. Gehäusesystem (10) nach Anspruch 6 oder 7, **dadurch gekennzeichnet, dass** die Nut (38) axial versetzt zum Andrückmittel (36) angeordnet ist.

9. Gehäusesystem (10) nach einem der Ansprüche 6 bis 8, **dadurch gekennzeichnet, dass** die Nut (38) durch korrespondierende Ausnehmungen (38a, 38b) im Befestigungselement (18) und in der Leitschaufel (14) gebildet ist.

10. Gehäusesystem (10) nach einem der Ansprüche 1 bis 9, **dadurch gekennzeichnet, dass** mehrere Leitschaufeln (14) vorgesehen sind, die in Form eines Leitschaufelkranzes (17) am Gehäuse (12) angeordnet sind.

11. Gehäusesystem (10) nach Anspruch 10, **dadurch gekennzeichnet, dass** der Leitschaufelkranz (17) mehrere Leitschaufelsegmente (16) umfasst, wobei jedes Leitschaufelsegment (16) über wenigstens zwei Befestigungselemente (18) am Gehäuse (12) festgelegt ist.

12. Axialströmungsmaschine, insbesondere Flugzeugturbine, mit einem Gehäusesystem (10) gemäß einem der Ansprüche 1 bis 11.

13. Axialströmungsmaschine nach Anspruch 12, **dadurch gekennzeichnet, dass** innerhalb des Gehäuses (12) des Gehäusesystems (10) wenigstens eine Laufschaufel (15) stromauf und/oder stromab der Leitschaufel (14) angeordnet ist.

14. Axialströmungsmaschine nach Anspruch 13, **dadurch gekennzeichnet, dass** das Gehäuse (12) des Gehäusesystems (10) wenigstens eine Dichtung (19), insbesondere eine Einlaufdichtung und/oder eine Honigwabendichtung, zur Verringerung einer Leckageströmung zwischen dem Gehäuse (12) und einer Schaufelspitze der wenigstens einen Laufschaufel (15) umfasst.

## Claims

1. Housing system (10) for an axial turbomachine, in particular for an aircraft turbine, comprising:
- a housing (12);
- at least one guide vane (14) which is secured to the housing (12) by means of at least one fastening element (18);
- a sealing element (20) for reducing a leakage flow between the fastening element (18) and the housing (12), **characterized in that** the sealing element (20) is arranged between a wall (22) of the fastening element (18) that is located downstream with respect to a flow direction (I) of the axial turbomachine, and a wall (24) of the housing (12), the fastening element (18) being arranged on a radially outer vane root (30) of the guide vane (14); and
- a pressing means (36) which is designed as a pressing edge that is adjacent to the wall (22), and by means of which the sealing element (20) can be subjected to an axial force and pressed against the wall (24) of the housing (12) at least during operation of the axial turbomachine.

2. Housing system (10) according to claim 1, **characterized in that** the sealing element (20) is slotted and/or annular and/or in multiple parts and/or elastically deformable.

3. Housing system (10) according to either claim 1 or claim 2, **characterized in that** the fastening element (18) has a hook-shaped region (26) that is arranged in an associated receptacle (28) of the housing (12).

4. Housing system (10) according to any of claims 1 to 3, **characterized in that** the sealing element (20) comprises at least one through-opening (34), in particular a metering bore, by means of which it is possible to adjust a cooling airflow between a chamber (32a, 32b) of the housing system (10) arranged upstream of the fastening element (18) and downstream of the fastening element (18), respectively.

5. Housing system (10) according to any of claims 1 to 4, **characterized in that** the pressing means (36) is designed as a pressing edge on the fastening element (18).

6. Housing system (10) according to any of claims 1 to 5, **characterized in that** a groove (38) is provided in which a radially inner end region (20a) of the sealing element (20) is arranged.

7. Housing system (10) according to claim 6, **characterized in that** the groove (38) is oblique.

8. Housing system (10) according to either claim 6 or claim 7, **characterized in that** the groove (38) is arranged so as to be axially offset with respect to the pressing means (36).

9. Housing system (10) according to any of claims 6 to 8, **characterized in that** the groove (38) is formed by corresponding recesses (38a, 38b) in the fastening element (18) and in the guide vane (14).

10. Housing system (10) according to any of claims 1 to 9, **characterized in that** a plurality of guide vanes (14) are provided that are arranged on the housing (12) in the form of a guide vane ring (17).

11. Housing system (10) according to claim 10, **characterized in that** the guide vane ring (17) comprises a plurality of guide vane segments (16), each guide vane segment (16) being secured to the housing (12) by means of at least two fastening elements (18).

12. Axial turbomachine, in particular an aircraft turbine, comprising a housing system (10) according to any of claims 1 to 11.

13. Axial turbomachine according to claim 12, **characterized in that** at least one guide vane (15) is arranged inside the housing (12) of the housing system (10), upstream and/or downstream of the guide vane (14).

14. Axial turbomachine according to claim 13, **characterized in that** the housing (12) of the housing system (10) comprises at least one seal (19), in particular an inlet seal and/or a honeycomb seal, for reducing a leakage flow between the housing (12) and a vane tip of the at least one guide vane (15).

## Revendications

1. Système formant carter (10) destiné à une turbomachine axiale, en particulier une turbine d'aéronef, comprenant :
- un carter (12) ;
- au moins une aube directrice (14) qui est fixée au carter (12) par le biais d'au moins un élément de fixation (18) ;
- un élément d'étanchéité (20) destiné à réduire un écoulement de fuite entre l'élément de fixation (18) et le carter (12),
**caractérisé en ce que** l'élément d'étanchéité (20) est disposé entre **une paroi (22) de l'élément** de fixation (18), située en aval par rapport à un sens d'écoulement (I) de la turbomachine axiale, et une paroi (24) du carter (12), l'élément de fixation (18) étant disposé **au niveau d**'un pied **d'aube** (30) radialement extérieur de **l'aube directrice** (14) ; et
- un moyen de pression (36) qui est conçu comme un bord de pression, adjacent à la paroi (22), au moyen duquel l'élément d'étanchéité (20) peut être soumis à une force axiale au moins pendant le fonctionnement de la turbomachine axiale et peut être pressé contre la paroi (24) du carter (12).

2. Système formant carter (10) selon la revendication 1, **caractérisé en ce que** l'élément d'étanchéité (20) a une forme de fente et/ou **d'anneau et/**ou est conçu en plusieurs parties et/ou de manière élastiquement déformable.

3. Système formant carter (10) selon la revendication 1 ou 2, **caractérisé en ce que** l'élément de fixation (18) comporte une région (26) en forme de crochet qui est disposée dans un logement associé (28) du carter (12).

4. Système formant carter (10) selon l'une des revendications 1 à 3, **caractérisé en ce que** l'élément d'étanchéité (20) comporte au moins une ouverture de passage (34), notamment un alésage de dosage, au moyen de laquelle un flux d'air de refroidissement peut être réglé entre des espaces (32a, 32b) du système formant carter (10) qui sont ménagés en amont de l'élément de fixation (18) et en aval de l'élément de fixation (18).

5. Système formant carter (10) selon l'une des revendications 1 à 4, **caractérisé en ce que** le moyen de pression (36) est conçu comme un bord de pression au niveau de l'élément de fixation (18).

6. Système formant carter (10) selon l'une des revendications 1 à 5, **caractérisé en ce qu'**une rainure (38) est prévue dans laquelle est disposée une région d'extrémité (20a) radialement intérieure de l'élément d'étanchéité (20).

7. Système formant carter (10) selon la revendication 6, **caractérisé en ce que** la rainure (38) est formée obliquement.

8. Système formant carter (10) selon la revendication 6 ou 7, **caractérisé en ce que** la rainure (38) est disposée de manière décalée axialement par rapport au moyen de pression (36).

9. Système formant carter (10) selon l'une des revendications 6 à 8, **caractérisé en ce que** la rainure (38) est formée par des évidements correspondants (38a, 38b) ménagés dans l'élément de fixation (18) et dans **l'aube directrice** (14).

10. Système formant carter (10) selon l'une des revendications 1 à 9, **caractérisé en ce que** plusieurs aubes directrices (14) sont prévues qui sont disposées sous la forme d'une **couronne d'aubes directrices** (17) au niveau du carter (12).

11. Système formant carter (10) selon la revendication 10, **caractérisé en ce que** la couronne d'aubes directrices (17) comprend plusieurs segments d'aube directrice (16), chaque segment **d'aube directrice** (16) étant fixé au carter (12) par le biais d'au moins deux éléments de fixation (18).

12. Turbomachine axiale, en particulier turbine d'aéronef, comprenant un système formant carter (10) selon l'une des revendications 1 à 11.

13. Turbomachine axiale selon la revendication 12, **caractérisée en ce que**, **à l'intérieur du** carter (12) du système formant carter (10), au moins une aube directrice (15) est disposée en amont et/ou en aval de **l'aube directrice** (14).

14. Turbomachine axiale selon la revendication 13, **caractérisée en ce que** le carter (12) du système formant carter (10) comporte au moins une garniture d'étanchéité (19), en particulier **une garniture d'étanchéité d'entrée et/**ou une garniture d'étanchéité en nid d'abeille, destinée à réduire un écoulement de fuite entre le carter (12) et une extrémité **de l**'au moins une aube directrice (15).
